# EUROPÄISCHE PATENTSCHRIFT

(11) **EP 1 915 638 B1**
(45) Veröffentlichungstag und Bekanntmachung des Hinweises auf die Patenterteilung: **18.05.2011**
(21) Anmeldenummer: 06777541.1
(22) Anmeldetag: 03.07.2006
(51) Int. Cl.: G01S 7/481, G01S 7/497, G01S 17/36

(54) **MESSGERÄT**
MEASURING INSTRUMENT
APPAREIL DE MESURE

(30) Priorität: 08.08.2005 DE 102005037251
(43) Veröffentlichungstag der Anmeldung: 30.04.2008
(73) Patentinhaber: ROBERT BOSCH GMBH, 70442 Stuttgart (DE)
(72) Erfinder: SKULTETY-BETZ, Uwe, 70771 Leinfelden-Echterdingen (DE); HAASE, Bjoern, 70182 Stuttgart (DE); STIERLE, Joerg, 71111 Waldenbuch (DE); WOLF, Peter, 70771 Leinfelden-Echterdingen (DE); RENZ, Kai, 70771 Leinfelden-Echterdingen (DE)
(86) Internationale Anmeldenummer: PCT/EP2006/063781
(87) Internationale Veröffentlichungsnummer: WO 2007/017311

(56) Entgegenhaltungen:
- EP-A- 0 793 117
- EP-A- 1 054 267
- EP-A- 1 351 070
- WO-A-93/20458
- DE-A1- 4 316 348
- DE-A1- 19 804 050
- DE-A1- 19 804 059
- US-A- 5 235 454
- US-A1- 2001 048 517

## Beschreibung

### Stand der Technik

Die Erfindung geht aus von einem Messgerät, insbesondere von einer handgehaltenen Vorrichtung zur Distanzmessung, nach dem Oberbegriff des Anspruchs 1.

Um bei einer Messung, beispielsweise bei einer Entfernungsmessung, ein möglichst genaues Messergebnis zu erzielen, ist es vorteilhaft, wenn eine bekannte Referenzgröße, im Falle einer Entfernungsmessung, beispielsweise eine bekannte Referenzstrecke, zur Verfügung steht. Mit Hilfe einer derartigen Referenzgröße kann das Messgerät von Zeit zu Zeit beispielsweise kalibriert werden oder es können Geräte-interne Laufzeiten des Messsignals bestimmt und somit bei einer Messung berücksichtigt werden.

Aus der DE 198 040 50 A1 ist ein Entfernungsmessung bekannt mit einer Laserdiode und einer Photodiode zum Erzeugen bzw. Empfangen eines optischen Sende- bzw. Empfangssignals. Zur Durchführung einer Kalibrierung dieses Entfernungsmessgeräts ist dieses mit einer stellbaren Klappe versehen, die bei einer Referenzmessung von einem Stellantrieb in einen optischen Pfad des Sendemesssignals geschwenkt wird, wodurch das Sendemesssignal umgelenkt und über eine Referenzstrecke direkt auf die Photodiode gerichtet wird.

Aus der EP 1351070 A1 ist ein elektrooptisches, para-axiales Distanzmesssystem bekannt, bei dem eine starre und positionsfeste Kante in den Sendepfad des Messgeräts hineinragt, um einen Teil der Messstrahlung direkt auf die Empfangsdiode bzw. eine zusätzliche Referenzdiode zu leiten.

Aus der DE 43 163 48 A1 ist eine Vorrichtung zur Distanzmessung bekannt, die über eine schaltbare Strahlenumlenkeinrichtung verfügt, welche um eine Achse motorisch schwenkbar ist. Die vom Messstrahlenbündel beaufschlagte Oberfläche der Strahlenumlenkeinrichtung reflektiert einen gerichteten, divergenten Strahlenkegel in Richtung auf eine als Lichtleiter genutzte optische Faser. Die Öffnung des Strahlenkegels ist dabei so groß, dass in allen Positionen des lateral verschiebbaren Lichtleiters Strahlung in die Lichtleitereintrittsfläche des Lichtleiters eindringen kann.

Aus der WO 93/20458 ist ein Laserdistanzmessgerät mit einer internen Referenzstrecke bekannt. Bei dieser Vorrichtung wird über eine in den Sendepfad einschiebbare Umlenkeinheit ein Bruchteil des Sendemesssignals auf die Empfangsdiode umgelenkt, um eine geräteinterne Referenzmessung durchzuführen.

Aus der EP 0 793 117 A2 ist ein optischer Entfernungsmesser bekannt, bei dem eine reflektierende Platte über eine Verstellmimik in den Pfad des Sendemessignals eingebracht werden kann, um das Sendemesssignal zu einer internen Referenzmessung zu nutzen. Dabei wird das Sendemesssignal über die reflektierende Platte abgelenkt und über optische Filterelemente abgeschwächt und anschliessend auf die Empfangsdiode geleitet. Die EP 0 793 117 A2 erwähnt, dass anstelle der reflektierenden Platte auch eine "diffusion plate" genutzt werden kann, um das Sendemesssignal zu einer Referenzmessung zu nutzen.

### Vorteile der Erfindung

Die Erfindung geht aus von einem Messgerät, insbesondere einem handgehaltenen Messgerät zur Distanzmessung, mit zumindest einem Sendeast für ein Messsignal, sowie mit stellbaren Schaltmitteln zur Umlenkung des Messsignals, wobei die Schaltmittel in einer ersten Stellung zumindest einen Teil des Messsignals reflektieren und in einer zweiten Schaltstellung den Sendeast für die Messstrahlung freigeben.

Es wird vorgeschlagen, dass die Schaltmittel die Messstrahlung in der ersten Stellung diffus, d.h. insbesondere ungerichtet reflektieren.

Messgeräte, und insbesondere Entfernungsmessgeräte in ihrer heutigen Ausprägung ermöglichen die Entfernungsmessung über einen großen Distanzbereich. Entfernungsmesser mit einer möglichen Messweite von deutlich über 100 m, bei einer Auflösung im mm-Bereich sind heutzutage für jedermann kommerziell erhältlich. Eine Entfernungsmessung über eine derart große Distanz bei gleichzeitig entsprechend hoher Auflösung der Entfernungsmessung setzt eine empfindliche Empfangseinheit, bzw. ein Messsignal mit relativ hoher Signalstärke voraus.

Wird das Messsignal im Rahmen einer Referenzmessung direkt auf eine Referenzdiode bzw. auf die Empfangsdiode geleitet, so kann es aufgrund der hohen Signalstärke zu einer Übersteuerung und somit zu einer Fehlmessung der Referenz-messung kommen. Über eine Referenzmessung, bei der eine geräteinterne Referenzstrecke vermessen wird, soll jedoch die Genauigkeit des Messgeräts erhöht und somit die Zuverlässigkeit der Messung gewährleistet werden.

Bei Geräten des Standes der Technik wird die Strahlungsintensität bei einer Referenzmessung daher beispielsweise durch einen großen Abstand zum Empfänger oder zusätzliche Filterelemente reduziert.

Dadurch, dass die Entfernungsmessgeräte heutzutage immer kleiner und kompakter gebaut sind, ist insbesondere ein direkter Weg zwischen dem Referenzumschaltelement und der Empfangs- bzw. Referenzdiode erwünscht. Dieser direkte Weg des Messsignals auf die Referenzdiode führt jedoch zu einer hohen Messsignalintensität auf dem Empfangsdetektor.

In vorteilhafter Weise wird bei dem vorgeschlagenen Messgerät die Messstrahlung bei einer Referenzmessung nicht vollständig und gerichtet auf die zur Referenzmessung benutzte Empfangsdiode gesendet, sondern es wird lediglich ein Bruchteil des Messsignals verwendet. Dazu sind im Gerät Schaltmittel vorhanden, die in einer ersten Schaltstellung das Messsignal diffus reflektieren bzw. streuen und somit nur einen Teil der Lichtintensität auf einen Referenzempfänger auftreffen lassen.

Aufgrund der diffusen Reflektion bzw. Streuung an den Schaltmittel wird erreicht, dass die Messsignalstärke, die bei einer Referenzmessung verwendet wird, deutlich reduziert ist. Die erfindungsgemäße Ausgestaltung der als Referenzklappe dienenden Schaltmittel ist fertigungstechnisch einfach sowie kostenneutral herzustellen. Zusätzliche Komponenten zur Signalreduzierung sind nicht erforderlich.

In vorteilhafter Weise verfügen die Schaltmittel über eine Reflektionsfläche, an der das Messsignal bei einer Referenzmessung reflektiert wird. Die Reflektionsfläche weist dabei eine nicht ebene Oberflächenstruktur auf. So kann die Oberflächenstruktur dieser Reflektionsfläche der Schaltmittel beispielsweise direkt beim Fertigungsprozess der Schaltmittel ausgebildet werden. Es ist beispielsweise möglich, eine definierte Erodierstruktur in einem Spritzgusswerkzeug, welches die Schaltmittel ausbildet, vorzusehen. Die Schaltmittel und die Reflektionsstruktur lassen sich in vorteilhafter Weise direkt in Kunststoff ausbilden.

In einer vorteilhaften Ausführungsfbrm des erfindungsgemäßen Messgeräts ist die Reflektionsfläche der Schaltmittel im Auftreffbereich der Messstrahlung mit einer Prismenstruktur versehen, welche zu einer diffusen Reflektion insbesondere zu einer richtungsabhängigen diffusen Reflektion des Messsignals führt.

All diesen Ausgestaltungen der Reflektionsfläche des Schaltmittels ist gemein, dass die Die diffuse Reflektion trotz Richhmgsabhängigkeit erhalten bleibt, sodass das Messsignal nach der Reflektion an dem Stellelement nur zu einem kleinen Bruchteil auf einen, der Referenzmessung dienenden Empfangsdetektor fällt.

In vorteilhafter Weise ist die reflektierende bzw. streuende Struktur einstückig mit der Reflektionsfläche der Schaltmittel ausgebildet. Diese kann insbesondere direkt beim Spritzprozess für die Schaltmittel ausgebildet werden, so dass sich ein einfaches Herstellungsverfahren für die vorteilhaften Schaltmittel und somit auch für das erfindungsgemäße Messgerät ergibt.

Weitere Vorteile des erfindungsgemäßen Messgeräts sind in der nachfolgenden Zeichnung sowie in der zugehörigen Beschreibung offenbart.

### Zeichnung

In der Zeichnung ist ein Ausfiihrungsbeispiel eines erfindungsgemäßen Messgeräts, sowie mehrere Ausführungsbeispiele für ein erfindungsgemäßes Schaltmittel dargstellt, die in der nachfolgenden Beschreibung näher erläutert werden sollen. Die Figuren der Zeichnungen, deren Beschreibung sowie die Ansprüche enthalten zahlreiche Merkmale in Kombinationen. Ein Fachmann wird diese Merkmale auch einzeln betrachten und zu weiteren, sinnvollen Kombinationen zusammenfassen.

Es zeigen:
- Figur 1: ein Entfernungsmessgerät mit einer Sendeeinheit, einer Empfangs- einheit und einer Umlenkeinheit in einer perspektivischen Übersichts- darstellung,
- Figur 2: Schaltmittel eines erfindungsgemäßen Messgeräts in einer Schnitt- darstellung,
- Figur 3: eine Detaildarstellung der Referenzstrecke eines erfindungsgemäßen Messgeräts in einer schematischen Aufsicht,
- Figur 4: eine perspektivische Darstellung eines ersten Ausführungsbeispiels für ein erfindungsgemäßes Schaltmittel,

### Beschreibung der Ausführungsbeispiele

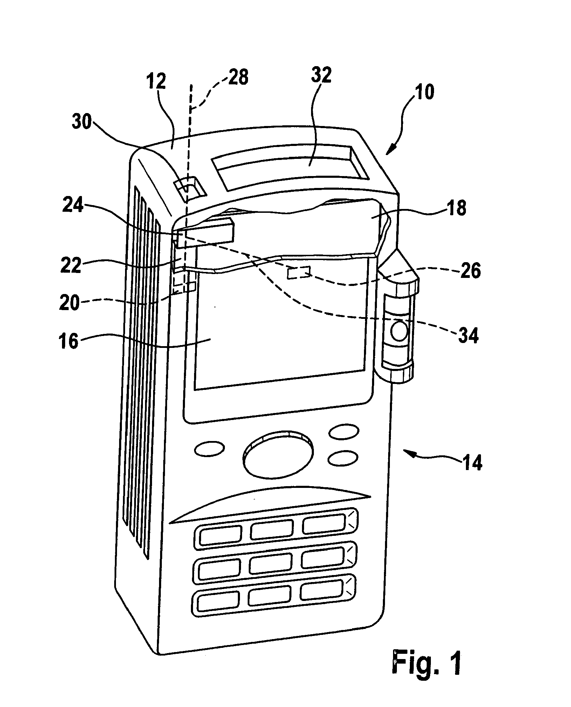

Figur 1 zeigt ein als Entfernungsmessgerät 10 ausgeführtes Messgerät. Dieses weist ein Gehäuse 12, Betätigungselemente 14 zum Ein- bzw. Ausschalten des Entfernungsmessgeräts 10 sowie zum Starten bzw. Konfigurieren eines Messvorgangs auf. Neben den Bedienelementen 14 besitzt das Messgerät ein Display 16 zur Wiedergabe von Messergebnissen. Auf einem Trägerelement 18 innerhalb des Gehäuses 12 des Messgeräts 10 sind eine als Laserdiode ausgeführte Sendeeinheit 20 zur Erzeugung eines optischen Sendemesssignals, ein Lichtkanal 22, eine Umlenkeinheit 24 zum Umlenken des Sendemesssignals und eine als Photodiode ausgeführte Empfangseinheit 26 zum Empfangen eines Empfangsmesssignals angeordnet. Dabei sind in Figur 1 die Sendeeinheit 20, der Lichtkanal 22, die Umlenkeinheit 24 und ein Referenzpfand 34 zur Empfangseinheit 26 eher schematisch angedeutet.

Zur Messung eines Abstandes des Entfernungsmessgeräts 10 zu einem entfernten Gegenstand wird im Betrieb des Entfernungsmessgeräts 10 ein Sendemesssignal von der Sendeeinheit 20 entlang eines Sendeastes 28 ausgesendet. Die Sendemessstrahlung verlässt das Messgerät über ein Fenster 30 im Gehäuse 12 des Geräts. Das von einer Oberfläche eines entfernten Gegenstands reflektierte Messsignal wird über eine Empfangsoptik 32 als Empfangsmesssignal von der Empfangseinheit 26, beispielsweise einer Photodiode, empfangen. Aus diesem Empfangsmesssignal kann dann beispielsweise mittels eines zwischen dem Sendemesssignal und dem Empfangsmesssignal durchgeführten Phasenvergleichs auf die Lichtlaufzeit geschlossen werden, sodass über den bekannten Betrag der Lichtgeschwindigkeit der gesuchte Abstand des Messgeräts zu dem zu vermessenden Objekt bestimmt werden kann.

Um Laufzeiten, die vom Abstand unabhängig sind und beispielsweise bei der Erzeugung des Sendemesssignals und/oder bei der Verarbeitung des Empfangsmesssignals im Gerät entstehen, zu berücksichtigen, wird vor einer Entfernungsmessung eine Referenzmessung durchgeführt. Hierbei wird das Sendemesssignal von der Umlenkeinheit 24 umgelenkt und über eine bekannte Referenzstrecke entlang eines Pfads 34 direkt auf die Empfangseinheit 26 gerichtet. Insbesondere befinden sich zwischen der Umlenkeinheit 24 und der als Empfangseinheit dienenden Referenzdiode 26 keine weiteren optischen Bauelemente, so dass das Messsignal direkt von der Umlenkeinheit auf die Referenzdiode trifft.

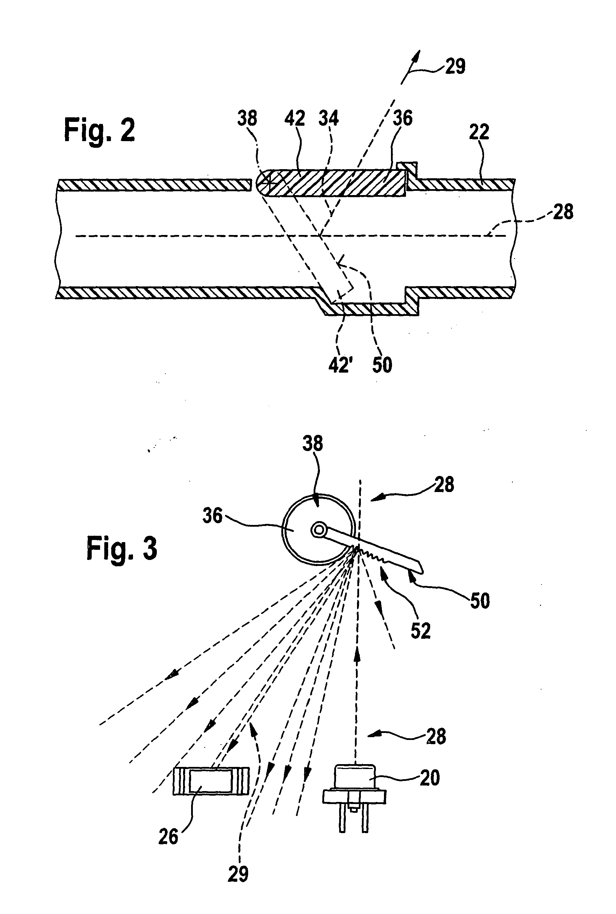

Figur 2 zeigt eine Umlenkeinrichtung 24 mit Schaltmitteln 36, die im Wesentlichen als schwenkbare Referenzklappe ausgebildet sind. Diese kann beispielsweise im Lichtkanal 22 des Messgerätes 10 angeordnet sein und um eine Rotationsachse 38 schwenkbar gelagert sein. Die als klappenförmiges Element ausgebildeten Schaltmittel 36 sind in Figur 2 in ihrer zweiten Schaltstellung 42' dargestellt, so dass der Sendeast 28 bzw. -der Kanal 22 für die Messstrahlung freigegeben ist. Ebenfalls in Figur 2 wiedergegeben und gestrichelt eingezeichnet ist das klappenförmige Element 36 in seiner ersten Stellung 42. In dieser ersten Schaltstellung 42 des Schaltmittels 36 wird das Messsignal, welches entlang des Sendeastes 28 ausgesendet wird, an einer Reflektionsfläche 50 des Schaltmittels 36 gestreut. In Figur 2 ist zudem die Richtung 29 des Referenzpfades 34 eingezeichnet, die der Richtung einer spiegelnden Reflektion des Messsignals an der Reflektionsfläche 50 entspricht. Im erfindungsgemäßen Messgerät erfolgt im Gegensatz zur spiegelnden Reflektion eine diffuse Reflektion bzw. Streuung, sodass für diese im Wesentlichen keine Richtung ausgezeichnet ist.

Figur 3 zeigt in einer Detailansicht eine Aufsicht auf die Referenzstrecke 34 eines erfindungsgemäßen Messgeräts. Eine Sendeeinheit 20, welche als Laserdiode ausgebildet ist, sendet ein Messsignal entlang des Messpfades 28 aus, welches an den Schaltmitteln 36 einer Umlenkeinheit 24 reflektiert wird. Dazu besitzen die Schaltmittel 36 eine Reflektionsfläche 50, die zumindest teilweise eine nicht ebene, d.h. insbesondere eine raue Oberflächenstruktur 52 aufweist. Aufgrund der nicht ebenen Oberflächenstruktur 52 wird das Messsignal an den Schaltmitteln diffus reflektiert bzw. gestreut, sodass das Messsignal nicht nur in die spiegelnde Richtung 29 reflektiert wird, sondern vielmehr nahezu in den vollständigen Halbraum, der der Reflektionsfläche 50 gegenüber liegt. Die Reflektion bzw. Streuung an den erfindungsgemäßen Schaltmitteln erfolgt somit nicht gerichtet. Dies ist in Figur 3 durch eine Vielzahl von Nlessstrahlrichtungen 31 in eher symbolischer Weise angedeutet. Da das auf die Schaltmittel 36 einfallende Messsignal diffus reflektiert bzw. gestreut wird, gelangt nur ein Bruchteil der Messsignalintensität auf die aktive Fläche 52 der Empfangseinheit 26, wie dies ebenfalls der Figur 3 entnommen werden kann.

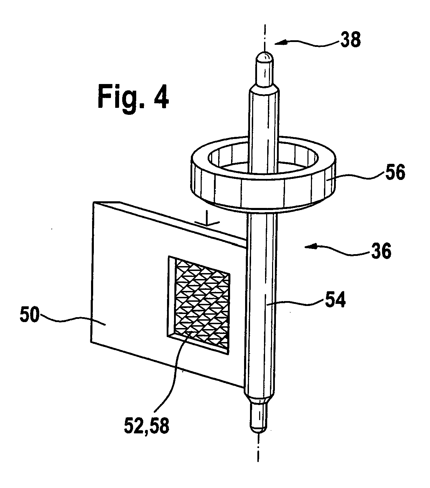

Figur 4 zeigt ein erstes Ausführungsbeispiel eines als klappenförmiges Element ausgeformten Schaltmittels 36. Das Schaltmittel 36 weist eine Welle 54 auf, über die das Schaltmittel um eine Achse 38 drehbar, gelagert ist. Auf die Welle 54 aufgesetzt ist ein

Permanentmagnet 56, der mit einem ansteuerbaren, in Figur 4 nicht dargestellten Elektromagnet wechselwirkt und somit zu einer Rotation des Schaltmittels 36 um die zentrale Achse 38 der Welle 54 führt, wenn der Elektromagnet in entsprechender Weise betätigt wird.

Einstückig mit der Welle 54 ausgebildet ist eine Reflektionsfläche 50, die zumindest teilweise eine nicht ebene Oberflächenstruktur 52 aufweist. Dazu kann die Referenzfläche 50 im Auftreffbereich der Messstrahlung beispielsweise eine Prismenstruktur 58 aufweisen, die zu einer diffusen Reflektion der auf diese Struktur 58 auftreffenden Messstrahlung führt. In vorteilhafter Weise sind die Welle 54, die Reflektionsfläche 50 sowie die Prismenstruktur 58 einstückig, beispielsweise in Kunststoff, ausgeformt. Auf diese Weise lässt sich die nicht ebene Oberflächenstruktur 52 der Schaltmittel 36 direkt bei der Herstellung der Schaltmittel ausbilden. So können die Schaltmittel beispielsweise durch einen Spritzgussvorgang hergestellt werden, bei dem die nicht ebene Oberflächenstruktur 52 gleichzeitig mit den Schaltmitteln 36 und somit kostenneutral hergestellt wird. Beispielsweise könnte eine definierte Erodierstrukturen an der entsprechenden Stelle im Spritzgusswerkzeug vorhanden sein, die eine entsprechende Struktur, insbesondere eine nicht ebene Struktur, auf der Reflektionsfläche 50 der Schaltmittel 36 ausbildet.

Das erfindungsgemäße Schaltelement 36 sowie das erfindungsgemäße Messgerät 10 sind nicht auf die in den Figuren aufgeführten Ausführungsbeispiele beschränkt.

Insbesondere ist die Oberflächenstruktur 52 des erfindungsgemäßen Schaltelements 36 nicht auf die in den Figuren dargestellten Ausführungsformen beschränkt. Sowohl die Art der diffus streuenden Struktur 52, als auch deren Begrenzungsfläche sind nicht auf die Ausführungsbeispiele beschränkt. So kann beispielsweise die diffus streuende Struktur 52 auch mit einer runden, rechteckigen nicht quadratischen oder einer oval Begrenzung ausgebildet sein.

## Patentansprüche

1. Messgerät, insbesondere ein Handgerät (10) zur Optischen Distanzmessung, mit zumindest einem Sendeast (28), zur Aussendung einer Messtrahlung sowie mit stellbaren Schaltmitteln (36) zur Umlenkung der Messtrahlung wobei die Schaltmittel (36) in einer ersten Schaltstellung (42) zumindest einen Teil der ausgesendegen Messstrahlung reflektieren und in einer zweiten Schattstettung (42') den Sendeast (28) für die Messstrahlung frei geben, wobei die Schaltmittel (36) die Messstrahlung in der ersten Schaltstellung (42) diffus reflektieren,
**dadurch gekennzeichnet, dass**
die Schaltmittel (36) über eine Reflektionsfläche (50) verfügen, die zumindest teilweise, nämlich im Auftreffbereich der Messstrahlung, als eine nicht ebene Oberflächenstruktur (52) eine Prismenstruktur (58) aufweist,
wobei diese Prismenstruktur zu einer diffusen Reflektion der auf diese Struktur (58) auftreffenden Messstrahlung führt,
und wobei eine Welle (54), über die das Schaltmittel (36) um eine Achse (38) drehbar gelagert ist, die Reflektionsfläche (50) sowie die Prismenstruktur (58) einstückig in Kunststoff mittels eines Spritzgussvorgangs ausgeformt sind, bei welchem definierte Erodierstrukturen an der entsprechenden Stelle im Spritzgusswerkzeug vorhanden sind, die eine entsprechende Prismenstruktur auf der Reflektionsfläche (50) der Schaltmittel (36) ausbilden.

2. Messgerät nach Anspruch 1, **dadurch gekennzeichnet, dass** die Schaltmittel (36) in Ihrer ersten Schaltstellung (42) nur einen Bruchteil der auf sie auftreffenden Messstrahlung auf einen Empfänger (26) reflektieren.

3. Messgerät nach einem der vorhergehenden Ansprüche, **dadurch gekennzeichnet, dass** die Schaltmittel (36) um die chse (38) stellbar sind.

4. Messgerät nach Messgerät nach Anspruch 3, **dadurch gekennzeichnet, dass** die Schaltmittel elektromagnetisch gestellt werden.

5. Messgerät nach einem der vorhergehenden Ansprüche, **dadurch gekennzeichnet, dass** die Messstrahlung eine modulierte optische Strahlung ist.

6. Messgerät nach einem der vorhergehenden Ansprüche, **dadurch gekennzeichnet, dass** das Messgerät ein Laserentfernungsmesser ist.

## Claims

1. Measuring instrument, in particular a hand-held instrument (10), for optical distance measurement, having at least one transmit branch (28) for emitting measuring radiation, and having adjustable switching means (36) for deflecting the measuring radiation, the switching means (36) reflecting at least a portion of the emitted measuring radiation in a first switching position (42), and releasing the transmit branch (28) for the measuring radiation in a second switching position (42'), the switching means (36) diffusely reflecting the measuring radiation in the first switching position (42),
**characterized in that**
the switching means (36) have a reflection surface (50) which has a prismatic structure (58) as an uneven surface structure (52) at least in part, specifically in the impingement region of the measuring radiation, said prismatic structure leading to a diffuse reflection of the measuring radiation impinging on said structure (58),
and a shaft (54), via which the switching means (36) is mounted rotatably about an axis (38), the reflection surface (50) and the prismatic structure (58) being formed in one piece in plastic by means of an injection moulding method in which there are present at the corresponding location in the injection mould defined erosion structures which form a corresponding prismatic structure on the reflection surface (50) of the switching means (36).

2. Measuring instrument according to Claim 1, **characterized in that** in their first switching position (42), the switching means (36) reflect onto a receiver (26) only a fraction of the measuring radiation impinging on them.

3. Measuring instrument according to one of the preceding claims, **characterized in that** the switching means (36) can be adjusted around the axis (38).

4. Measuring instrument according to Claim 3, **characterized in that** the switching means are adjusted electromagnetically.

5. Measuring instrument according to one of the preceding claims, **characterized in that** the measuring radiation is a modulated optical radiation.

6. Measuring instrument according to one of the preceding claims, **characterized in that** the measuring instrument is a laser rangefinder.

## Revendications

1. Appareil de mesure, en particulier appareil manuel (10) de mesure optique de distance, qui présente
au moins une branche d'émission (28) qui émet un rayonnement de mesure ainsi que des moyens ajustables de commutation (36) qui dévient le rayonnement de mesure,
les moyens de commutation (36) libérant dans une première position de commutation (42) au moins une partie de rayonnement de mesure émis et réfléchi et libérant dans une deuxième position de commutation (42') la branche d'émission (28) du rayonnement de mesure, les moyens de commutation (36) réfléchissant de manière diffuse le rayonnement de mesure dans la première position de commutation (42),
**caractérisé en ce que**
les moyens de commutation (36) disposent d'une surface réfléchissante (50) dont au moins une partie, à savoir la zone d'incidence du rayonnement de mesure, présente une structure prismatique (58) qui a la forme d'une structure non plane (52) de surface,
cette structure prismatique entraînant une réflexion diffuse du rayonnement de mesure incident sur cette structure (58),
un arbre (54) par lequel le moyen de commutation (36) est monté à rotation autour d'un axe (38), la surface réfléchissante (50) ainsi que la structure prismatique (58) étant formées d'un seul tenant en matière plastique au moyen d'une opération de moulage par injection dans laquelle des structures définies d'érosion sont présentes à l'emplacement approprié de l'outil de moulage par injection et forment une structure prismatique correspondante sur la surface réfléchissante (50) des moyens de commutation (36).

2. Appareil de mesure selon la revendication 1, **caractérisé en ce que** dans leur première position de commutation (42), les moyens de commutation (36) ne réfléchissent sur un récepteur (26) qu'une fraction du rayonnement de mesure indicent sur eux.

3. Appareil de mesure selon l'une des revendications précédentes, **caractérisé en ce que** les moyens de commutation (36) peuvent être ajustés autour de l'axe (38).

4. Appareil de mesure selon la revendication 3, **caractérisé en ce que** les moyens de commutation sont ajustés électromagnétiquement.

5. Appareil de mesure selon l'une des revendications précédentes, **caractérisé en ce que** le rayonnement de mesure est un rayonnement optique modulé.

6. Appareil de mesure selon l'une des revendications précédentes, **caractérisé en ce que** l'appareil de mesure est un dispositif de mesure de distance par laser.
